# EUROPEAN PATENT APPLICATION

(11) **EP 4 246 844 A1**
(43) Date of publication of application: **20.09.2023**
(21) Application number: 20964544.9
(22) Date of filing: 08.12.2020
(51) Int. Cl.: H04L 1/18

(54) **DATA PACKET PROCESSING METHOD AND APPARATUS**

(71) Applicant: Huawei Technologies Co., Ltd., Shenzhen, Guangdong 518129 (CN)
(72) Inventor: QIN, Daxuan, Shenzhen, Guangdong 518129 (CN)
(74) Representative: Huawei European IPR
(86) International application number: PCT/CN2020/134667
(87) International publication number: WO 2022/120599

(57) **Abstract**

Embodiments of this application provide a data packet processing method and apparatus, and relate to the field of communication technologies. The method includes: An upper computer sends a target data packet to a lower computer; the upper computer determines, based on a preset condition, that first feedback signaling from the lower computer is not received; the upper computer sends continue signaling to the lower computer; the upper computer receives second feedback signaling from the lower computer; and the upper computer sends the target data packet to the lower computer. The first feedback signaling is feedback signaling from the lower computer in response to a data packet of the upper computer. The second feedback signaling is feedback signaling from the lower computer in response to signaling of the upper computer. The continue signaling indicates to continue sending the target data packet. In this way, in a data packet transmission process, if data transmission is interrupted due to a communication exception, an unsuccessfully sent data packet can be resent without retransmitting all data. This can improve data transmission efficiency.

## Description

### TECHNICAL FIELD

This application relates to the field of communication technologies, and in particular, to a data packet processing method and apparatus.

### BACKGROUND

With continuous development of mobile communication technologies, various electronic devices such as an intelligent transportation device, a smart home device, and a robot are gradually entering people's daily lives. To meet various requirements of a user for using an electronic device, update speeds of the various electronic devices are gradually increasing, and downloading and upgrading of an application program for the electronic device are particularly necessary. For example, in the field of automotive electronics technologies, for various types of vehicles such as an intelligent connected vehicle, an autonomous vehicle, or a new energy vehicle, electronic control units (electronic control units, ECUs) included in the various types of vehicles, such as in-vehicle electronic devices, controllers, and various electronic control products, are increasingly complex. Accordingly, an application program of an electronic control product is increasingly frequently updated. In a production line of a host factory, a bootloader (such as bootloader) may be burnt to an ECU board of a vehicle in advance through a joint test action group (joint test action group, JTAG) interface. When the application program of the electric control product is updated, an upper computer can interact with the burnt bootloader in the ECU board through a serial interface to download or update the application program.

Generally, data interaction between the upper computer and the bootloader needs to be performed by using a controller area network (controller area network, CAN) interface respectively configured in the upper computer and the ECU board, to download or update the application program in the ECU.

However, in the foregoing process of downloading or updating the application program, when a communication exception occurs, transmission efficiency is low.

### SUMMARY

Embodiments of this application provide a data packet processing method and apparatus. In a data packet transmission process, if data transmission is interrupted due to a communication exception, an unsuccessfully sent data packet can be resent without retransmitting all data. This can improve data transmission efficiency.

According to a first aspect, an embodiment of this application provides a data packet processing method, including: An upper computer sends a target data packet to a lower computer; the upper computer determines, based on a preset condition, that first feedback signaling from the lower computer is not received, where the first feedback signaling is feedback signaling from the lower computer in response to a data packet of the upper computer; the upper computer sends continue signaling to the lower computer, where the continue signaling indicates to continue sending the target data packet; the upper computer receives second feedback signaling from the lower computer; the upper computer sends the target data packet to the lower computer; and the second feedback signaling is feedback signaling from the lower computer in response to signaling of the upper computer. In this way, in a data packet transmission process, if data transmission is interrupted due to a communication exception, an unsuccessfully sent data packet can be resent without retransmitting all data. This can improve data transmission efficiency.

In a possible implementation, before the upper computer sends the target data packet to the lower computer, the method further includes: The upper computer sends start signaling to the lower computer, where the start signaling indicates that data transmission starts; and that an upper computer sends a target data packet to a lower computer includes: The upper computer receives the second feedback signaling from the lower computer, and the upper computer sends the target data packet to the lower computer. In this way, the start signaling can be used to conveniently control a start of a data packet transmission process.

In a possible implementation, the method further includes: The upper computer determines that the data packet is sent; and the upper computer sends end signaling to the lower computer, where the end signaling indicates that data transmission ends. In this way, the end signaling can be used to conveniently control an end of a data packet transmission process.

In a possible implementation, before that an upper computer sends a target data packet to a lower computer, the method further includes: The upper computer divides to-be-sent data into a plurality of data packets, where the plurality of data packets include the target data packet, each data packet includes a number, and the number is used by the lower computer to combine the plurality of data packets. In this way, the plurality of data packets may be divided into packets for sending. This facilitates data transmission in a case of a large data packet.

In a possible implementation, that the upper computer determines, based on a preset condition, that first feedback signaling from the lower computer is not received includes: The upper computer determines that the first feedback signaling from the lower computer is not received within a preset time threshold. In this way, whether the first feedback signaling from the lower computer is received can be conveniently determined by using the specific time threshold.

In a possible implementation, before the upper computer sends continue signaling to the lower computer, the method further includes: The upper computer sets an unsuccessfully-sent identifier for the target data packet; and that the upper computer sends the target data packet to the lower computer includes: the upper computer sends the target data packet to the lower computer based on the unsuccessfully-sent identifier. In this way, an unsuccessfully sent data packet can be more conveniently obtained based on the unsuccessfully-sent identifier.

According to a second aspect, an embodiment of this application provides a data packet processing method, including: A lower computer receives continue signaling from an upper computer, where the continue signaling indicates to continue sending a target data packet; the lower computer sends second feedback signaling to the upper computer in response to the continue signaling, where the second feedback signaling is feedback signaling from the lower computer in response to signaling of the upper computer; and the lower computer receives the target data packet from the upper computer. In this way, in a data packet transmission process, if data transmission is interrupted due to a communication exception, an unsuccessfully sent data packet can be resent without retransmitting all data. This can improve data transmission efficiency.

In a possible implementation, before that a lower computer receives a continue signaling from an upper computer, the method further includes: The lower computer receives start signaling from the upper computer, where the start signaling indicates that data transmission starts; and the lower computer sends the second feedback signaling to the upper computer in response to the start signaling. In this way, a receiving status of the lower computer may be fed back by using the second feedback signaling, to facilitate a next operation of the upper computer.

In a possible implementation, before that a lower computer receives continue signaling from an upper computer, the method further includes: The lower computer determines that the target data packet from the upper computer is not received; and the lower computer sets a successfully-received identifier for a received data packet. In this way, received data can be obtained more conveniently based on the successfully-received identifier.

In a possible implementation, the method further includes: The lower computer receives end signaling from the upper computer, where the end signaling indicates that data transmission ends; and the lower computer sends the second feedback signaling to the upper computer in response to the end signaling. In this way, the receiving status of the lower computer may be fed back by using the second feedback signaling, to facilitate the next operation of the upper computer.

In a possible implementation, after that the lower computer sends the second feedback signaling to the upper computer in response to the end signaling, the method further includes: The lower computer combines a plurality of received data packets, where the plurality of data packets includes numbers and the successfully-received identifiers. In this way, the lower computer can combine the received plurality of data packets to obtain accurate and complete transmission data.

According to a third aspect, an embodiment of this application provides a data packet processing apparatus. The data packet processing apparatus may be an upper computer, or may be a chip or a chip system in an upper computer. The data packet processing apparatus may include a processing unit and a communication unit. When the data packet processing apparatus is the upper computer, the processing unit may be a processor, and the communication unit may be a communication interface or an interface circuit. The data packet processing apparatus may further include a storage unit, and the storage unit may be a memory. The storage unit is configured to store instructions, and the processing unit executes the instructions stored in the storage unit, so that the upper computer implements the data packet processing method described in any one of the first aspect or the possible implementations of the first aspect. When the data packet processing apparatus is the chip or the chip system in the upper computer, the processing unit may be a processor, and the communication unit may be a communication interface. For example, the communication interface may be an input/output interface, a pin, or a circuit. The processing unit executes the instructions stored in the storage unit, so that the upper computer implements the data packet processing method described in any one of the first aspect or the possible implementations of the first aspect. The storage unit may be a storage unit (for example, a register or a cache) in the chip, or may be a storage unit (for example, a read-only memory or a random access memory) that is in the upper computer and that is located outside the chip.

For example, the communication unit is configured to send a target data packet to a lower computer. The processing unit is configured to determine, based on a preset condition, that first feedback signaling from the lower computer is not received, where the first feedback signaling is feedback signaling from the lower computer in response to a data packet of the upper computer. The communication unit is further configured to send continue signaling to the lower computer, where the continue signaling indicates to continue sending the target data packet. The communication unit is further configured to receive second feedback signaling from the lower computer, where the second feedback signaling is feedback signaling from the lower computer in response to signaling of the upper computer. The communication unit is further configured to send the target data packet to the lower computer. In this way, in a data packet transmission process, if data transmission is interrupted due to a communication exception, an unsuccessfully sent data packet can be resent without retransmitting all data. This can improve data transmission efficiency.

In a possible implementation, the communication unit is specifically configured to send start signaling to the lower computer, where the start signaling indicates that data transmission starts. The communication unit is further specifically configured to send the target data packet to the lower computer. The communication unit is further specifically configured to receive the second feedback signaling from the lower computer, and send the target data packet to the lower computer.

In a possible implementation, the processing unit is further configured to determine that the data packet is sent. The communication unit is further configured to send end signaling to the lower computer, where the end signaling indicates that data transmission ends.

In a possible implementation, the processing unit is further configured to divide to-be-sent data into a plurality of data packets, where the plurality of data packets include the target data packet, each data packet includes a number, and the number is used by the lower computer to combine the plurality of data packets.

In a possible implementation, the processing unit is further specifically configured to determine that the first feedback signaling from the lower computer is not received within a preset time threshold.

In a possible implementation, the processing unit is further configured to set an unsuccessfully-sent identifier for the target data packet. The communication unit is further configured to send the target data packet to the lower computer. The communication unit is further specifically configured to send the target data packet to the lower computer based on the unsuccessfully-sent identifier.

According to a fourth aspect, an embodiment of this application provides a data packet processing apparatus. The data packet processing apparatus may be a lower computer, or may be a chip or a chip system in a lower computer. The data packet processing apparatus may include a processing unit and a communication unit. When the data packet processing apparatus is the lower computer, the processing unit may be a processor, and the communication unit may be a communication interface or an interface circuit. The data packet processing apparatus may further include a storage unit, and the storage unit may be a memory. The storage unit is configured to store instructions, and the processing unit executes the instructions stored in the storage unit, so that the lower computer implements the data packet processing method described in any one of the second aspect or the possible implementations of the second aspect. When the data packet processing apparatus is the chip or the chip system in the lower computer, the processing unit may be a processor, and the communication unit may be a communication interface. For example, the communication interface may be an input/output interface, a pin, or a circuit. The processing unit executes the instructions stored in the storage unit, so that the lower computer implements the data packet processing method described in any one of the second aspect or the possible implementations of the second aspect. The storage unit may be a storage unit (for example, a register or a cache) in the chip, or may be a storage unit (for example, a read-only memory or a random access memory) that is in the lower computer and that is located outside the chip.

For example, the communication unit is configured to receive a continue signaling from an upper computer, where the continue signaling indicates to continue sending a target data packet. The communication unit is configured to send second feedback signaling to the upper computer in response to the continue signaling, where the second feedback signaling is feedback signaling from the lower computer in response to signaling or a data packet of the upper computer. The communication unit is further configured to receive a target data packet from the upper computer.

In a possible implementation, the communication unit is further configured to receive start signaling from the upper computer, where the start signaling indicates that data transmission starts. The lower computer sends the second feedback signaling to the upper computer in response to the start signaling.

In a possible implementation, the processing unit is further configured to determine that the target data packet from the upper computer is not received. The lower computer sets a successfully-received identifier for a received data packet.

In a possible implementation, the communication unit is further configured to receive end signaling from the upper computer, where the end signaling indicates that data transmission ends. The lower computer sends the second feedback signaling to the upper computer in response to the end signaling.

In a possible implementation, the processing unit is further configured to combine a plurality of received data packets, where the plurality of data packets include numbers and the successfully-received identifiers.

According to a fifth aspect, an embodiment of this application provides a computer-readable storage medium. The computer-readable storage medium stores a computer program or instructions. When the computer program or the instructions are run on a computer, the computer is enabled to perform the data packet processing method according to any one of the implementations of the first aspect and the second aspect.

According to a sixth aspect, an embodiment of this application provides a computer program product including instructions. When the instructions are run on a computer, the computer is enabled to perform the data packet processing method according to any one of the implementations of the first aspect and the second aspect.

According to a seventh aspect, an embodiment of this application provides a data packet processing system. The system includes any one or more of the following: the data packet processing apparatus described in the third aspect and the possible implementations of the third aspect, and the data packet processing apparatus described in the fourth aspect and the possible implementations of the fourth aspect.

According to an eighth aspect, an embodiment of this application provides a data packet processing apparatus. The apparatus includes a processor and a storage medium. The storage medium stores instructions. When the instruction are run by the processor, the data packet processing method described in any one of the implementations of the first aspect and the second aspect is implemented.

According to a ninth aspect, this application provides a chip or a chip system. The chip or the chip system includes at least one processor and a communication interface. The communication interface is interconnected to the at least one processor through a line. The at least one processor is configured to run a computer program or instructions, to perform the data packet processing method according to any one of the implementations of the first aspect and the second aspect.

The communication interface in the chip may be an input/output interface, a pin, a circuit, or the like.

In a possible implementation, the chip or the chip system described in this application further includes at least one memory, and the at least one memory stores instructions. The memory may be a storage unit inside the chip, for example, a register or a cache, or may be a storage unit (for example, a read-only memory or a random access memory) of the chip.

According to a tenth aspect, this application provides a computer program product. The computer program product stores instructions. When the instructions are run by one or more processors, the data packet processing method according to any one of the foregoing aspects or implementations is implemented.

It should be understood that the third aspect to the tenth aspect of this application correspond to the technical solutions in the first aspect and the second aspect of this application, and beneficial effects achieved by the aspects and corresponding feasible implementations are similar. Details are not described again.

### BRIEF DESCRIPTION OF DRAWINGS

FIG. 1 is a schematic diagram of downloading an application program through a CAN interface according to an embodiment of this application;
FIG. 2 is a schematic diagram of a scenario of data packet processing according to an embodiment of this application;
FIG. 3 is a functional block diagram of a vehicle 201 in FIG. 2 according to an embodiment of this application;
FIG. 4 is a schematic diagram of a structure of a computer 202 in FIG. 2 according to an embodiment of this application;
FIG. 5 is a schematic flowchart of a data packet processing method according to an embodiment of this application;
FIG. 6 is a schematic diagram of data transmission through interaction between an upper computer and a lower computer according to an embodiment of this application;
FIG. 7 is a schematic flowchart of a data packet processing method of an upper computer according to an embodiment of this application;
FIG. 8A and FIG. 8B are a schematic flowchart of a data packet processing method of a lower computer according to an embodiment of this application;
FIG. 9 is a schematic diagram of downloading an application program through interaction between an upper computer and a lower computer according to an embodiment of this application;
FIG. 10 is a schematic diagram of a structure of a data packet processing apparatus according to an embodiment of this application;
FIG. 11 is a schematic diagram of a hardware structure of a data packet processing apparatus according to an embodiment of this application; and
FIG. 12 is a schematic diagram of a structure of a chip according to an embodiment of this application.

### DESCRIPTION OF EMBODIMENTS

To clearly describe the technical solutions in embodiments of this application, words such as "first" and "second" are used in embodiments of this application to distinguish between same items or similar items that have basically a same function or purpose. For example, a first value and a second value are merely intended to distinguish between different values, but not to limit a sequential order thereof. A person skilled in the art may understand that the terms such as "first" and "second" do not limit a quantity or an execution sequence, and the terms such as "first" and "second" do not indicate a definite difference.

It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, the word such as "example" or "for example" is intended to present a related concept in a specific manner.

In embodiments of this application, "at least one" means one or more, and "a plurality of' means two or more. A term "and/or" describes an association relationship between associated objects and represents that three relationships may exist. For example, Aand/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, or c may represent a, b, c, a combination of a and b, a combination of a and c, a combination of b and c, or a combination of a, b, and c, where a, b, and c may be in a singular or plural form.

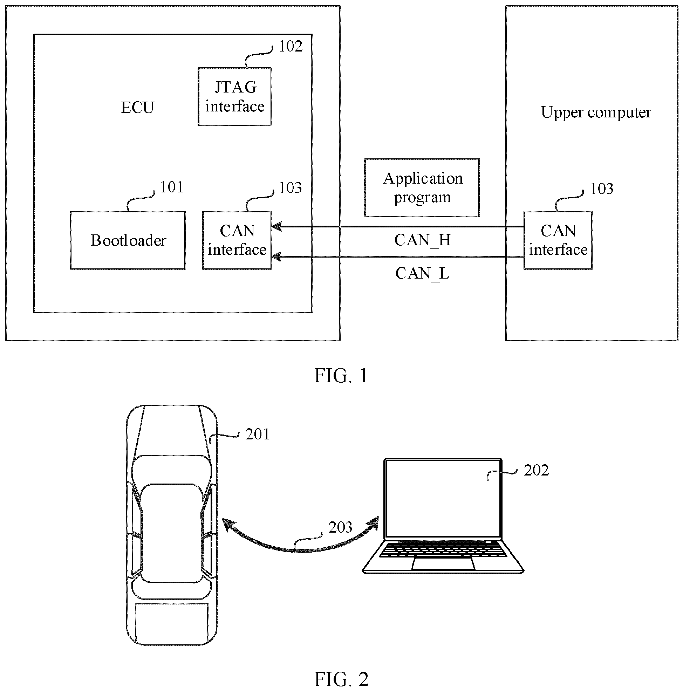

For example, FIG. 1 is a schematic diagram of downloading an application program through a CAN interface.

As shown in FIG. 1, a bootloader 101 has been preburnt into an ECU board through a JTAG interface 102. When the application program is transmitted to the ECU, an upper computer may interact with the bootloader 101 in the ECU board through a serial interface, for example, a CAN interface 103, based on unified diagnostic services (unified diagnostic services, UDS), to complete downloading or updating of the application program for the ECU.

In a process in which the upper computer interacts with the bootloader 101 in the ECU through the CAN interface 103 based on a UDS diagnosis protocol, and transmits the application program to the ECU, when a communication exception occurs on the CAN interface 103 due to a poor contact, a network exception, or the like, the bootloader 101 cannot continue to receive some data packets of the application program sent by the upper computer. In this case, the bootloader 101 needs to wait for communication recovery, and the upper computer retransmits all data packets corresponding to the application program. In this transmission method in which the data packet needs to be retransmitted when the communication exception occurs, data transmission efficiency is low, and further, a download or update progress of the application program for the ECU is affected.

Therefore, embodiments of this application provide a data packet processing method and apparatus. An upper computer sends a target data packet to a lower computer. When the upper computer determines, based on a preset condition, that first feedback signaling from the lower computer is not received, the upper computer sends continue signaling to the lower computer. The upper computer receives second feedback signaling from the lower computer. The upper computer sends the target data packet to the lower computer. In this data packet processing method, a case in which data transmission may be interrupted due to the communication exception is considered, an unsuccessfully sent data packet may be resent without retransmitting all data packets, thereby improving data transmission efficiency.

To better understand the method in embodiments of this application, the following first describes an application scenario to which embodiments of this application are applicable.

The data packet processing method provided in embodiments of this application may be applied to scenarios in which various types of vehicles need to update and download an application program. The method is applied to a scenario in which software (for example, a bootloader) in an ECU of a vehicle such as an intelligent connected vehicle, an autonomous vehicle, or a new energy vehicle interacts with upper computer software in an upper computer, to download or update an application program for the ECU. The lower computer may be the ECU in the vehicle, and the upper computer may be a computer interacting with the lower computer.

For example, FIG. 2 is a schematic diagram of a scenario of data packet processing according to an embodiment of this application.

As shown in FIG. 2, the scenario may include a vehicle 201, a computer 202, and a connection line 203. The vehicle 201 includes an ECU (or may be referred to as a lower computer). For example, when the vehicle downloads an application program, the vehicle 201 may be connected, through the connection line 203, to the computer 202 configured to download the application program for an ECU in the vehicle. In this way, upper computer software in the computer 202 (or referred to as an upper computer) may interact with lower computer software in the vehicle 201, to transmit an installation data package (or referred to as an installation package) of the application program to the lower computer. When the application program in the vehicle is updated, a process of interaction between the upper computer and the lower computer is the same as the foregoing download process, and an update data packet (or referred to as an update packet) of the application program may be subsequently transmitted to the lower computer.

In a possible implementation, the data packet processing method provided in this embodiment of this application may also be applied to a scenario in which the application program is updated and downloaded by using an over the air (over the air technology, OTA) technology. The OTA technology is a technology that remotely manages data and applications through an air interface. The air interface may use other technologies such as a wireless application protocol (wireless application protocol, WAP), a general packet radio service (general packet radio service, GPRS), code division multiple access (code division multiple access, CDMA), a wireless network (Wi-Fi), and a 4G technology.

For example, an operator may place the installation package or the update package of the application program in an OTA server. When the application program in the vehicle needs to be downloaded (or updated), a vehicle user may search an in-vehicle infotainment screen or a mobile phone for the installation package (or the update package) of the required application program, and trigger a button for downloading (or updating) the application program. The installation package (or the update package) of the application program in the OTA server may be transmitted to the lower computer of the vehicle by using the data packet processing method provided in this embodiment of this application, to download (or update) the application program in the vehicle.

For example, the vehicle may also periodically check a version status of a current application program, and automatically download, by using the data packet processing method provided in this embodiment of this application, an update package of an application program of a latest version in the OTA server to the vehicle through the air interface. This implements update of a related application program of the vehicle. The OTA technology can save costs of time and labor, and meet requirements of the market and customers more flexibly and conveniently. The upper computer may be the OTA server.

It may be understood that the data packet processing method provided in this embodiment of this application may also be applied to another scenario in which the lower computer interacts with the upper computer to transmit data. A specific application scenario of the data packet processing method is not limited in this embodiment of this application.

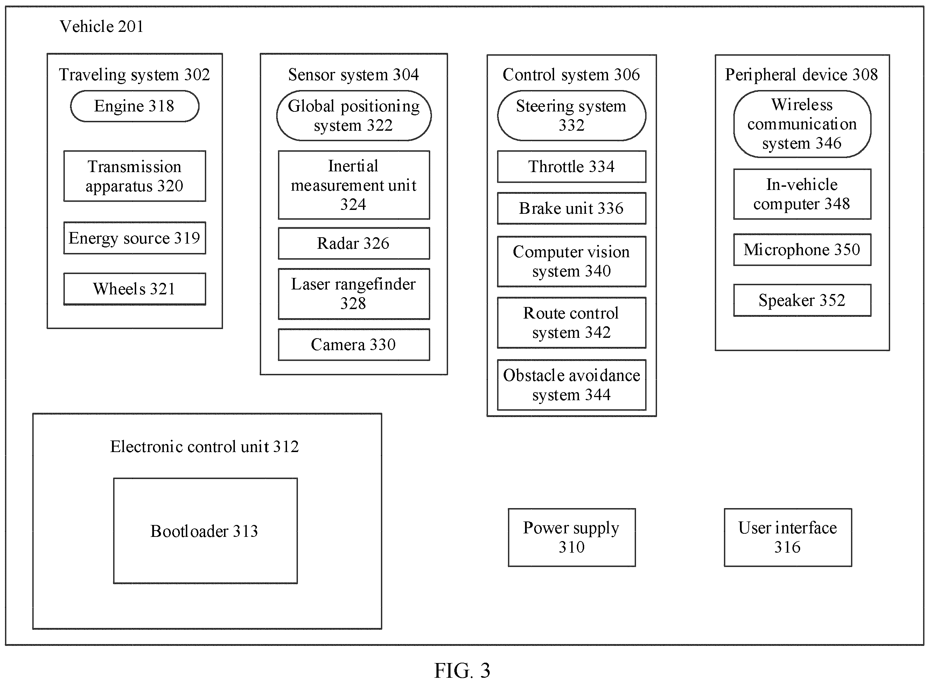

For example, FIG. 3 is a functional block diagram of the vehicle 201 in FIG. 2. The vehicle 201 includes an electronic control unit 312 (or may be referred to as a lower computer).

The vehicle 201 may include various subsystems, such as a traveling system 302, a sensor system 304, a control system 306, one or more peripheral devices 308, a power supply 310, an electronic control unit 312, and a user interface 316. Optionally, the vehicle 201 may include more or fewer subsystems, and each subsystem may include a plurality of components. In addition, each subsystem and component of the vehicle 201 may be interconnected in a wired or wireless manner.

The traveling system 302 may include a component that provides power for the vehicle 201. In an embodiment, the traveling system 302 may include an engine 318, an energy source 319, a transmission apparatus 320, and wheels/tires 321. The engine 318 may be an internal combustion engine, a motor, an air compression engine, or another type of an engine combination, for example, a hybrid engine composed of a gasoline engine and a motor, or a hybrid engine composed of an internal combustion engine and an air compression engine. The engine 318 converts the energy source 319 into mechanical energy.

The sensor system 304 may include several sensors configured to sense and detect ambient environment information of the vehicle 201. For example, the sensor system 304 may include a positioning system 322 (the positioning system may be a global positioning system, a BeiDou system, or another positioning system), an inertial measurement unit (inertial measurement unit, IMU) 324, a radar 326, a laser rangefinder 328, and a camera 330. The sensor system 304 may further include sensors of an internal system of the monitored vehicle 201 (for example, an in-vehicle air quality monitor, a fuel flow meter, and an engine oil temperature gauge). The control system 306 controls operations of the vehicle 201 and the components of the vehicle 201. The control system 306 may include various elements, including a steering system 332, a throttle 334, a brake unit 336, a computer vision system 340, a route control system 342, and an obstacle avoidance system 344.

Certainly, in an instance, the control system 306 may additionally or alternatively include a component other than those shown and described. Alternatively, the control system 306 may delete some of the foregoing components.

The vehicle 201 interacts with an external sensor, another vehicle, another computer system, or a user through the peripheral device 308. The peripheral device 308 may include a wireless communication system 346, an in-vehicle computer 348, a microphone 350, and/or a speaker 352.

The wireless communication system 346 may wirelessly communicate with one or more devices directly or through a communication network. For example, the wireless communication system 346 may use 3G cellular communication, such as CDMA, EVD0, global system for mobile communications (global system for mobile communications, GSM)/general packet radio service (general packet radio service, GPRS), 4G cellular communication, such as LTE, or 5G cellular communication. The wireless communication system 346 may communicate with a wireless local area network (wireless local area network, WLAN) using wireless fidelity (wireless fidelity, Wi-Fi).

The electronic control unit (or referred to as an ECU) 312 includes a bootloader (for example, a bootloader) 313. The bootloader 313 may be software configured to complete an interaction operation of a lower computer.

In some embodiments, the ECU includes a central processing unit (central processing unit, CPU), a random access memory (random access memory, RAM), a read-only memory (read-only memory, ROM), an input/output (input/output, I/O) interface, and an analog-to-digital converter (analog-to-digital converter, A/D). The ECU is first used in engine control. With the development of vehicle electronics, the ECU is gradually used in control an antilock brake system (antilock brake system, ABS), a four-wheel drive system, an electronically controlled automatic transmission, an active suspension system, an airbag system, or the like, and is gradually extended to control various safety, network, or entertainment systems of a vehicle. With the improvement of vehicle electronization, especially the increase of functions such as active safety and autonomous driving, a quantity of ECUs of vehicles keeps increasing.

For example, there may be a plurality of ECUs in the vehicle, and each ECU has its own bootloader program. When an ECU is updated, an upper computer may communicate with a bootloader in the ECU through a serial interface or an air interface (which may be used for OTA), and download an application program installation package (or update package) to the ECU for installation (or update). In the foregoing installation (or update) process, the installation package (update package) of the application program may be transmitted by using the data packet processing method provided in this embodiment.

For example, an ECU that controls the in-vehicle computer 348 in the vehicle 201 is used as an example. When an application program of the in-vehicle computer 348 needs to be downloaded or updated, the vehicle 201 may establish a communication connection to the upper computer through the user interface 316. The upper computer may transmit an installation package or an update package used to download or update the in-vehicle computer 348 to the ECU that controls the in-vehicle computer.

In some embodiments, the peripheral device 308 provides a means for a user of the vehicle 201 to interact with the user interface 316. For example, the in-vehicle computer 348 may provide information for the user of the vehicle 201. The user interface 316 may further operate the in-vehicle computer 348 to receive user input. The in-vehicle computer 348 may be operated by using a touchscreen. In another case, the peripheral device 308 may provide a means for the vehicle 201 to communicate with another device located in the vehicle. For example, the microphone 350 may receive audio (for example, a voice command or another audio input) from the user of the vehicle 201. Likewise, the speaker 352 may output audio to the user of the vehicle 201.

The power supply 310 may supply power to various components of the vehicle 201. In an embodiment, the power supply 310 may be a rechargeable lithium-ion or lead-acid battery. One or more battery packs of such a battery may be configured as a power supply to supply power to the various components of the vehicle 201. In some embodiments, the power supply 310 and the energy source 319 may be implemented together, for example, in some pure electric vehicles.

In various aspects described herein, the processor may be located far away from the vehicle and wirelessly communicate with the vehicle. In another aspect, some processes described herein are performed on a processor disposed inside the vehicle, while others are performed by a remote processor, including performing steps necessary for single manipulation.

The user interface 316 is configured to provide information for or receive information from the user of the vehicle 201. Optionally, the user interface 316 may include one or more input/output devices in a set of peripheral devices 308, for example, the wireless communication system 346, the in-vehicle computer 348, the microphone 350, and the speaker 352.

Optionally, the foregoing components are merely examples. In actual application, components in the foregoing modules may be added or deleted based on an actual requirement. FIG. 3 should not be understood as a limitation on this embodiment of this application.

The vehicle 201 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in this embodiment of this application.

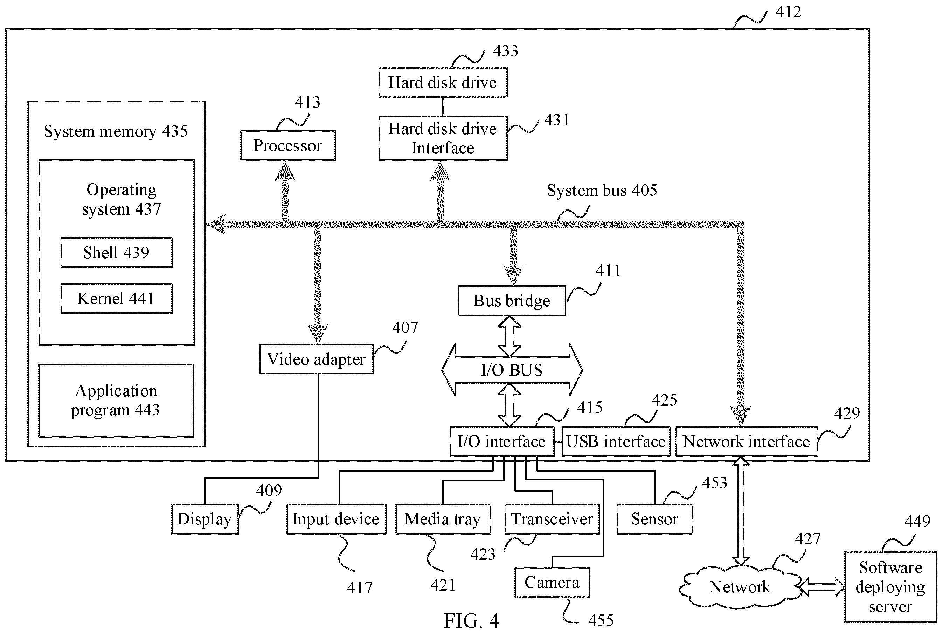

For example, FIG. 4 is a schematic diagram of a structure of the computer 202 in FIG. 2. In this embodiment of this application, the computer 202 includes an application program 443 that interacts with the lower computer in FIG. 3.

As shown in FIG. 4, the computer 202 includes a processor 413, and the processor 413 is coupled to a system bus 405. The processor 413 may be one or more processors, and each processor may include one or more processor cores. A video adapter (video adapter) 407 may drive a display 409, and the display 409 is coupled to the system bus 405. The system bus 405 is coupled to an input/output (I/O) bus through a bus bridge 411. An I/O interface 415 is coupled to the I/O bus. The I/O interface 415 communicates with a plurality of I/O devices, for example, an input device 417 (for example, a keyboard, a mouse, and a touchscreen) and a media tray (media tray) 421 (for example, a CD-ROM and a multimedia interface). A transceiver 423 (which can send and/or receive a wireless communication signal), a camera 455 (which can capture static and dynamic digital video images), and an external USB interface 425 are further included. Optionally, an interface connected to the I/O interface 415 may be a universal serial bus (universal serial bus, USB) interface.

The processor 413 may be any conventional processor, including a reduced instruction set computer (reduced instruction set computer, RISC) processor, a complex instruction set computer (complex instruction set computer, CISC) processor, or a combination thereof. Optionally, the processor may be a dedicated apparatus such as an application-specific integrated circuit (application-specific integrated circuit, ASIC). Optionally, the processor 413 may be a neural network processor or a combination of the neural network processor and the foregoing conventional processor.

The computer 202 may communicate with a software deploying server 449 through a network interface 429. The network interface 429 is a hardware network interface, for example, a network adapter. A network 427 may be an external network, for example, Internet, or may be an internal network, for example, Ethernet or a virtual private network (virtual private network, VPN). Optionally, the network 427 may alternatively be a wireless network, for example, a Wi-Fi network or a cellular network.

A hard disk drive interface 431 is coupled to the system bus 405. The hard disk drive interface 431 is connected to a hard disk drive 433. The system memory 435 is coupled to the system bus 405. Software running in the system memory 435 may include an operating system (operating system, OS) 437 and an application program 443 of the computer 202.

The operating system includes a shell (shell) 439 and a kernel (kernel) 441. The shell 439 is an interface between a user and the kernel of the operating system. The shell is an outermost layer of the operating system. The shell manages interaction between the user and the operating system: The shell waits for a user's input, explains the user's input to the operating system, and processes various output results of the operating system.

The kernel 441 includes components, in the operating system, that are configured to manage a memory, a file, a peripheral, and a system resource. The kernel 441 directly interacts with hardware. The kernel 441 of the operating system usually runs processes, provides inter-process communication, and provides CPU time slice management, interruption, memory management, I/O management, and the like.

The application program 443 may include an application program required for downloading and updating an application program of an electronic control product in the vehicle 201. By using interaction between the application program 443 and the lower computer in the vehicle 201, the application program required by the vehicle 201 may be transmitted from the computer 202 to the lower computer in the vehicle 201. The application program 443 may be on a system of the software deploying server (deploying server) 449.

A sensor 453 is associated with the computer system. The sensor 453 is configured to detect an environment around the computer 202. For example, the sensor 453 may detect an animal, a car, an obstacle, and a sidewalk.

The following describes terms described in embodiments of this application. It may be understood that the description is intended to explain the embodiments of this application more clearly, and does not necessarily constitute a limitation on the embodiments of this application.

The upper computer described in this embodiment of this application may be a computer or a single-chip microcomputer configured to send operation instructions, and may provide an operation interaction interface for a user and present feedback data to the user.

The upper computer software described in this embodiment of this application may be software configured to complete an interaction operation of the upper computer.

The lower computer described in this embodiment of this application may be an electronic device that performs a corresponding action or reads corresponding data based on instructions. For example, the instructions may be received from the upper computer. For example, the lower computer is the ECU described in this embodiment of this application.

The lower computer software described in this embodiment of this application may be software configured to complete an interaction operation of the lower computer. For example, the lower computer software is the bootloader described in this embodiment of this application. The bootloader may be a segment of program executed before the system runs. By using the program, a hardware device may be initialized, and a mapping table of memory space may be established, to establish a proper software and hardware environment of the system.

The ECU described in this embodiment of this application may be an electronic control apparatus using a single-chip microcomputer as a core, and has powerful mathematical operation and logic determining, data management, and data processing functions. The ECU can be divided into hardware and software. The hardware is a physical component of the ECU, and the software is instructions and a data system that implements the ECU control function. The ECU processes a signal from the sensor and uses control instructions to control the corresponding execution components to act based on the instructions.

By using specific embodiments, the following describes in detail the technical solutions of this application and how to resolve the foregoing technical problem by using the technical solutions of this application. The following specific embodiments may be independent of each other or may be combined with each other, and a same or similar concept or process may not be described in detail in some embodiments.

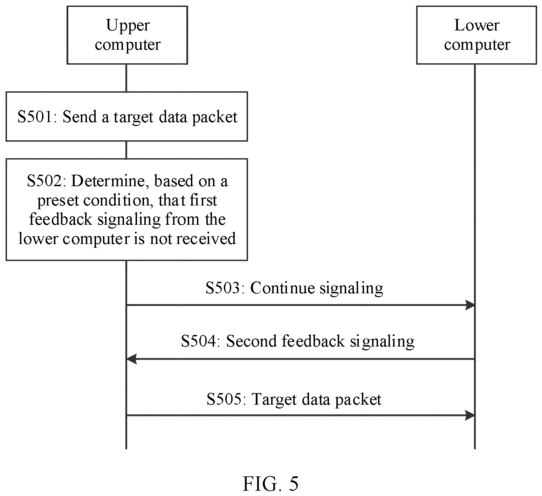

For example, FIG. 5 is a schematic flowchart of a data packet processing method according to an embodiment of this application. As shown in FIG. 5, the method includes the following steps.

S501: An upper computer sends a target data packet to a lower computer.

In this embodiment of this application, the upper computer establishes a communication connection to the lower computer, and the upper computer may transmit, to the lower computer, an installation package (or an update package) used to download or update an application program in the lower computer.

For example, when the upper computer sends the installation package used to download the application program to the lower computer, the target data packet may be a data packet in the installation package. When the upper computer sends the update package used to update the application program to the lower computer, the target data packet may be a data packet in the update package.

S502: The upper computer determines, based on a preset condition, that first feedback signaling from the lower computer is not received.

In this embodiment of this application, the first feedback signaling is feedback signaling from the lower computer in response to the data packet of the upper computer. The first feedback signaling may also be referred to as feedback signaling, or the like. The first feedback signaling may be specifically signaling of a character, a character string, a number, or another type.

For example, when the first feedback signaling is a character, the first feedback signaling may be represented by another character such as a or n. When the first feedback signaling is a character string, the first feedback signaling may be represented by another character string such as ack or acknowledge. When the first feedback signaling is a number, the first feedback signaling may be represented by another number such as 1, 1, or 111. It may be understood that the first feedback signaling may include other content based on different actual scenarios. This is not limited in this embodiment of this application.

For example, a possible implementation in which the upper computer determines, based on the preset condition, that the first feedback signaling from the lower computer is not received is that the lower computer cannot reply to the first feedback signaling because a serial interface exception, a network exception, or the like occurs in the lower computer. Alternatively, when the upper computer cannot successfully receive the first feedback signaling because a serial interface exception, a network exception, or the like occurs in the upper computer in a process in which the lower computer replies to the first feedback signaling to the upper computer, the upper computer may determine that the first feedback signaling sent by the lower computer is not received.

For example, another possible implementation in which the upper computer determines, based on the preset condition, that the first feedback signaling from the lower computer is not received is that the upper computer sends the target data packet, the upper computer does not receive the first feedback signaling from the lower computer within specific time, and the upper computer may determine that the first feedback signaling sent by the lower computer is not received.

S503: The upper computer sends continue signaling to the lower computer.

In this embodiment of this application, the continue signaling indicates to continue sending the target data packet. The continue signaling may be signaling of a character, a character string, a number, or another type.

For example, when the continue signaling is a character, the continue signaling may be represented by another character such as c or g. When the continue signaling is a character string, the continue signaling may be represented by another character string such as continue or goon. When the continue signaling is a number, the continue signaling may be represented by another number such as 2, 22, or 222. It may be understood that the continue signaling may include other content based on different actual scenarios. This is not limited in this embodiment of this application.

For example, the upper computer may determine a status of serial interface communication or network communication. If the upper computer determines that serial interface communication or network communication recovers, the upper computer may send the continue signaling to the lower computer.

For example, a possible implementation in which the upper computer sends the continue signaling to the lower computer is as follows: The upper computer cyclically sends the continue signaling to the lower computer in a specific period, or manually controls the upper computer to send the continue signaling to the lower computer. Alternatively, when the upper computer cyclically sends the continue signaling to the lower computer, and sending still fails, a process of sending the continue signaling may be manually suspended. After the communication recovers, the continue signaling continues to be sent to the lower computer.

S504: The upper computer receives second feedback signaling from the lower computer.

In this embodiment of this application, the second feedback signaling is feedback signaling from the lower computer in response to signaling of the upper computer.

It should be noted that the second feedback signaling may also be referred to as feedback signaling. The first feedback signaling and the second feedback signaling described in this embodiment of this application are used to distinguish functions of the feedback signaling in different scenarios. Content used to indicate the first feedback signaling may be the same as or different from content used to indicate the second feedback signaling. For example, both the first feedback signaling and the second feedback signaling may be represented by ack, acknowledge, or the like. For a specific form of the second feedback signaling, refer to the description of the first feedback signaling. Details are not described herein again.

The lower computer receives the continue signaling from the upper computer, and sends the second feedback signaling to the upper computer. This may indicate that the lower computer agrees to receive the target data packet from the upper computer, or indicate that the lower computer is ready to receive a subsequent target data packet from the upper computer.

S505: The upper computer sends the target data packet to the lower computer.

In this embodiment of this application, the target data packet may include a data packet that is not successfully sent due to a serial interface exception, a network exception, or the like.

The upper computer may send the unsuccessfully sent target data packet to the lower computer. A specific communication protocol, a communication path, and the like that are used by the upper computer to send the target data packet to the lower computer are not limited in this embodiment of this application.

In conclusion, in this embodiment of this application, when data transmission is interrupted due to a communication exception, the upper computer may resend the unsuccessfully sent data packet, and the upper computer does not need to resend all data packets, so that data transmission efficiency can be improved.

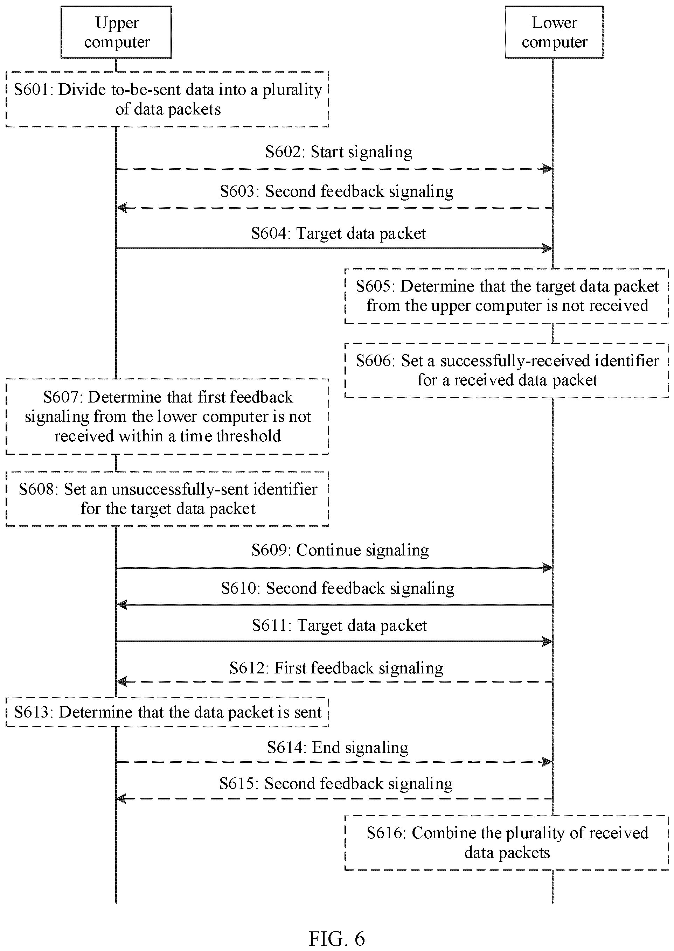

For example, FIG. 6 is a schematic diagram of data transmission through interaction between an upper computer and a lower computer. As shown in FIG. 6, the data transmission through interaction between the upper computer and the lower computer may include the following steps.

S601: The upper computer divides to-be-sent data into a plurality of data packets.

In this embodiment of this application, the plurality of data packets include the target data packet in the foregoing embodiment, and the target data packet may be any data packet in the plurality of data packets. In a possible implementation, each data packet may include a number, and the number is used by the lower computer to combine the plurality of data packets.

For example, the upper computer is communicatively connected to the lower computer. The upper computer may divide the to-be-sent data into the plurality of data packets, and may number the plurality of data packets obtained through dividing as a packet 1, a packet 2, ..., and a packet n. In a possible implementation, numbering may be performed based on a size of a data packet. It may be understood that a method for numbering the plurality of data packets may alternatively include other content based on an actual scenario. This is not limited in this embodiment of this application.

S602: The upper computer sends start signaling to the lower computer.

In this embodiment of this application, the start signaling indicates that data transmission starts, and the start signaling may be a character, a character string, a number, or signaling of another type.

For example, when the start signaling is a character, the start signaling may be represented by another character such as b or s. When the start signaling is a character string, the start signaling may be represented by another character string such as begin or start. When the start signaling is a number, the start signaling may be represented by another number such as 0, 00, or 000. It may be understood that the start signaling may include other content based on different actual scenarios. This is not limited in this embodiment of this application.

In this embodiment of this application, the upper computer sends the start signaling to the lower computer, to start a data packet transmission process.

S603: The lower computer sends second feedback signaling to the upper computer.

In this embodiment of this application, the lower computer receives the start signaling from the upper computer, and the lower computer sends the second feedback signaling to the upper computer in response to the start signaling.

For example, the upper computer is communicatively connected to the lower computer, and the lower computer completes hardware initialization and waits for the start signaling sent by the upper computer. When the lower computer receives the start signaling sent by the upper computer, the lower computer sends the second feedback signaling to the upper computer.

S604: The upper computer sends the target data packet to the lower computer.

S605: The lower computer determines that the target data packet from the upper computer is not received.

For example, a possible implementation in which the lower computer determines that the target data packet of the upper computer is not received is that the target data packet is not received because a serial interface exception, a network exception, or the like occurs in the lower computer. Alternatively, when the lower computer does not receive the target data packet because the serial interface exception, the network exception, or the like occurs in the upper computer in a process in which the upper computer sends the target data packet to the lower computer, the lower computer may determine that the target data packet sent by the upper computer is not received.

For example, another possible implementation in which the lower computer determines that the target data packet of the upper computer is not received is that the lower computer does not receive the target data packet of the upper computer within specific time, and the lower computer may determine that the target data packet sent by the upper computer is not received.

S606: The lower computer sets a successfully-received identifier for a received data packet.

In this embodiment of this application, a method for setting the successfully-received identifier by the lower computer for the received data packet may be setting a label indicating successful reception for the received data packet, for example, receive. It may be understood that a method for setting the successfully-received identifier for the received data packet may include other content based on different actual scenarios. This is not limited in this embodiment of this application.

S607: The upper computer determines that the first feedback signaling from the lower computer is not received within a time threshold.

In this embodiment of this application, the time threshold may be set based on an actual application scenario. For example, the time threshold may be set to a value that is the same as or similar to a longest time consumed by the upper computer to receive the first feedback signaling from the lower computer, or another value. This is not specifically limited in this embodiment of this application.

For example, the lower computer sends the first feedback signaling, the upper computer does not receive the first feedback signaling from the lower computer within the time threshold, and the upper computer may determine that the first feedback signaling sent by the lower computer is not received.

S608: The upper computer sets an unsuccessfully-sent identifier for the target data packet.

For example, a method for setting the unsuccessfully-sent identifier for the target data packet by the upper computer may be: The upper computer sets a label indicating unsuccessful sending for the target data packet, such as fail; the upper computer may buffer the target data packet to a specific area; or the like. It may be understood that a method for setting the unsuccessfully-sent identifier for the target data packet may include other content based on different actual scenarios. This is not limited in this embodiment of this application.

S609: The upper computer sends continue signaling to the lower computer.

S610: The lower computer sends the second feedback signaling to the upper computer.

S611: The upper computer sends the target data packet to the lower computer.

In this embodiment of this application, the upper computer may send the target data packet to the lower computer based on the unsuccessful-sent identifier that is set for the target data packet in S608.

For example, the lower computer may obtain the target data packet in a manner such as a label such as fail set by the upper computer, or an address index manner, and send the target data packet to the lower computer.

S612: The lower computer sends the first feedback signaling to the upper computer.

In this embodiment of this application, the lower computer receives the target data packet from the upper computer, and the lower computer sends the first feedback signaling to the upper computer in response to the target data packet.

S613: The upper computer determines that the data packet is sent.

In this embodiment of this application, the upper computer may repeatedly perform operations such as S604 to S612 until all data packets are sent.

In a possible implementation, the upper computer may determine, according to a method such as a number of the data packet, that the data packet is sent. For example, a plurality of data packet numbers of the to-be-sent data include: a packet 1 to a packet n. If the upper computer determines that all data packets numbered from the packet 1 to the packet n are successfully sent to the lower computer, the upper computer may determine that the data packets are sent.

S614: The upper computer sends end signaling to the lower computer.

In this embodiment of this application, the end signaling indicates that data transmission ends. The end signaling may be signaling of a character, a character string, a number, or another type.

For example, when the end signaling is a character, the end signaling may be represented by another character such as e or f. When the end signaling is a character string, the end signaling may be represented by another character string such as end or finish. When the end signaling is a digit, the end signaling may be represented by another digit such as 3, 33, or 333. It may be understood that the end signaling may include other content based on different actual scenarios. This is not limited in this embodiment of this application.

S615: The lower computer sends the second feedback signaling to the upper computer.

In this embodiment of this application, the lower computer receives the end signaling from the upper computer, and the lower computer sends the second feedback signaling to the upper computer in response to the end signaling.

S616: The lower computer combines the plurality of received data packets.

In this embodiment of this application, the upper computer may combine the plurality of data packets in any possible manner. This is not specifically limited in this embodiment of this application.

For example, the plurality of data packets include numbers and the successfully-received identifiers. A possible implementation in which the lower computer combines the plurality of data packets that carry the successfully-received identifier is that the lower computer may combine the plurality of received data packets based on the number of the data packet. For example, the data packets transmitted by the upper computer are a packet 1, a packet 2, a packet 3, and a packet 4, and the lower computer combines the packet 1, the packet 2, the packet 3, and the packet 4 based on a sequence of numbers of the data packets, to obtain complete data.

It may be understood that S601, S602, S603, S605, S606, S607, S608, S612, S613, S614, S615, or S616 is an optional step. During specific implementation, an applicable step may be selected based on an actual application scenario.

It should be noted that, because control signaling in a communication protocol is not universal, for example, the control signaling of the UDS diagnosis protocol is only for the CAN protocol, a common data transmission process is limited by different communication protocols. However, in this embodiment of this application, a data transmission process is controlled by using the feedback signaling (including the first feedback signaling and the second feedback signaling), the continue signaling, the start signaling, and the end signaling, provided that the four types of signaling and data packets can be correctly transmitted. Therefore, this embodiment is universal in a communication protocol.

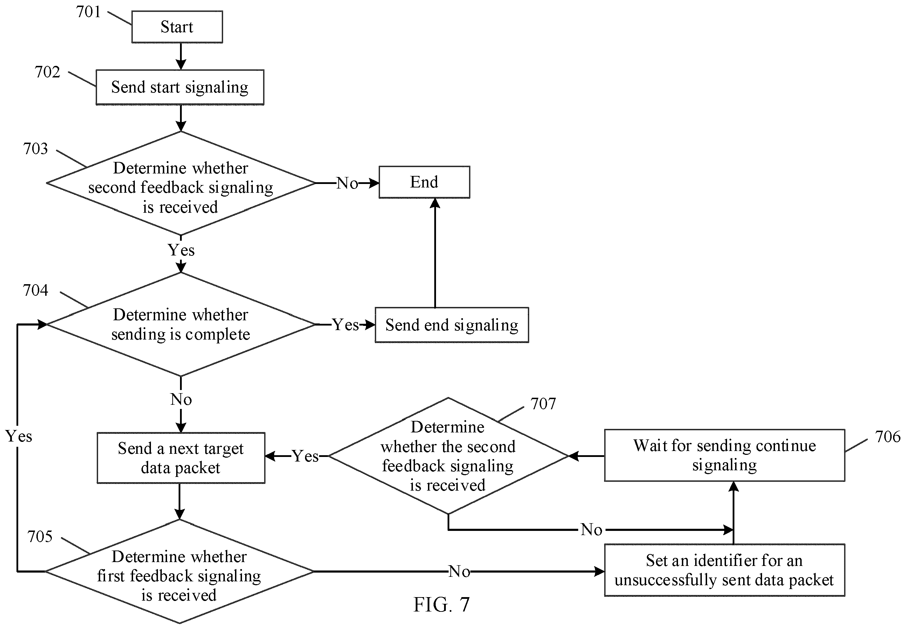

It may be understood that the foregoing is an embodiment in which a process of interaction between the upper computer and the lower computer is described, and corresponds to execution steps of the upper computer. For example, FIG. 7 is a schematic flowchart of a data packet processing method of an upper computer according to an embodiment of this application. In the embodiment corresponding to FIG. 7, an example in which the feedback signaling is "ack", the continue signaling is "continue", the start signaling is "start", and the end signaling is "end" is used for description. This example does not constitute a limitation on this embodiment of this application.

As shown in FIG. 7, the data packet processing steps of the upper computer may include the following steps.

S701: Data transmission starts.

For example, an upper computer establishes a communication connection to a lower computer. The upper computer may divide an installation package (or an update package) of an application program used for downloading or updating into a packet 1, a packet 2, ..., a packet m, ..., and a packet n. When sending data packets, the upper computer may sequentially send the data packets based on numbers of the data packets, or may randomly send the data packets. This is not limited in this embodiment of this application.

S702: The upper computer sends start to the lower computer.

S703: The upper computer determines whether ack sent by the lower computer is received.

For example, when the upper computer receives the ack sent by the lower computer, the upper computer may perform the step shown in S704. When the upper computer does not receive the ack sent by the lower computer, the transmission process may be ended.

S704: The upper computer determines whether the data packet is sent.

In this embodiment of this application, when the upper computer determines that all data packets have been sent, the upper computer sends end to the lower computer, to end a transmission process. When the upper computer determines that not all data packets have been sent, the upper computer may perform the steps shown in S705.

S705: The upper computer sends a next packet m to the lower computer.

S706: The upper computer determines whether the ack sent by the lower computer is received.

In this embodiment of this application, when the upper computer receives the ack within a specific time threshold, the upper computer may perform the step shown in S704. When the upper computer does not receive the ack within a specific time threshold, the upper computer may perform the step shown in S707.

S707: The upper computer sets an identifier for an unsuccessfully sent data packet.

For example, the upper computer sets an unsuccessfully-sent identifier for the packet m.

S708: The upper computer waits to send continue.

In this embodiment of this application, when a serial interface exception or a network exception occurs, the upper computer waits to send the continue. When serial interface communication or network communication is restored, the upper computer sends the continue to the lower computer. If communication cannot be restored to normal, the upper computer is always in a phase of waiting to send the continue.

S709: The upper computer determines whether the ack sent by the lower computer is received.

In this embodiment of this application, when the upper computer receives the ack sent by the lower computer, the upper computer performs the step shown in S705. When the upper computer does not receive the ack sent by the lower computer, the upper computer performs the step shown in S708.

For beneficial effects of this embodiment of this application, refer to the descriptions in the foregoing embodiment of dual-side communication between the upper computer and the lower computer. Details are not described herein again.

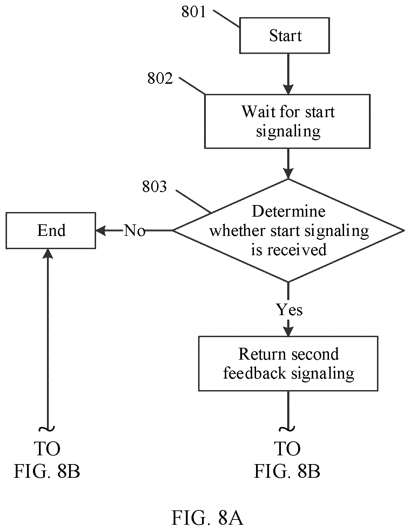

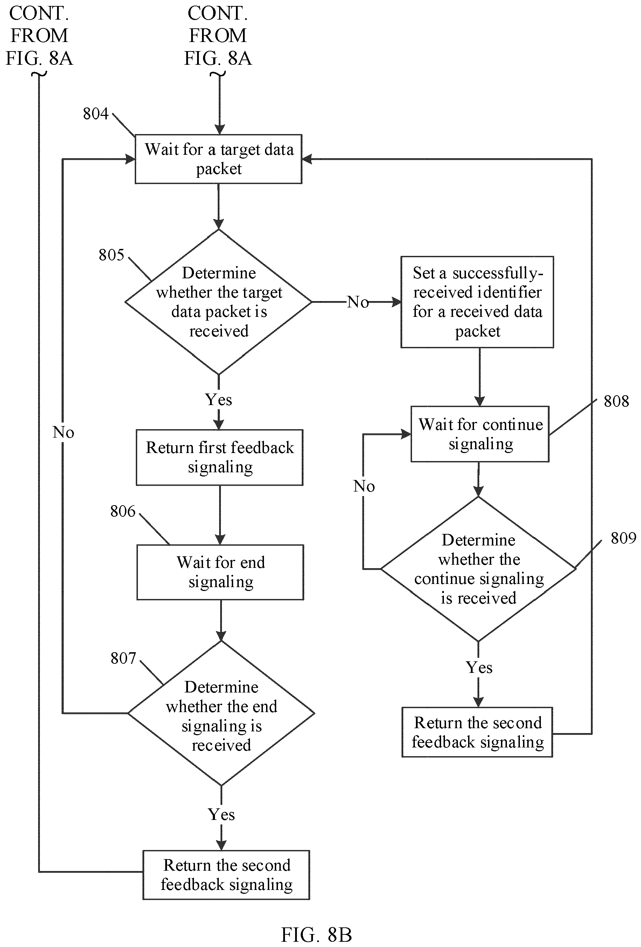

It may be understood that the foregoing is an embodiment in which the execution steps of the upper computer are described, and is corresponding to the execution steps of the lower computer. For example, FIG. 8A and FIG. 8B are a schematic flowchart of a data packet processing method of a lower computer according to an embodiment of this application. In the embodiment corresponding to FIG. 8A and FIG. 8B, an example in which feedback signaling (including first feedback signaling and second feedback signaling) is "ack", continue signaling is "continue", start signaling is "start", and end signaling is "end" is used for description. This example does not constitute a limitation on this embodiment of this application.

As shown in FIG. 8A and FIG. 8B, the data packet processing steps of the lower computer may include the following steps.

S801: Data transmission starts.

In this embodiment of this application, an upper computer establishes a communication connection to the lower computer, and the lower computer completes hardware initialization.

S802: The lower computer waits for start sent by the upper computer.

S803: The lower computer determines whether the start sent by the upper computer is received.

In this embodiment of this application, when the lower computer receives the start sent by the upper computer, the lower computer may perform the step shown in S804. When the lower computer does not receive the start sent by the upper computer, a transmission process ends.

S804: The lower computer returns ack to the upper computer.

S805: The lower computer waits for a packet m sent by the upper computer.

S806: The lower computer determines whether the packet m sent by the upper computer is received.

In this embodiment of this application, when the lower computer receives, within a specific time threshold, the packet m sent by the upper computer, the lower computer may perform the step shown in S807. When the lower computer does not receive, within a specific time threshold, the packet m sent by the upper computer, the lower computer may perform the step shown in S811.

S807: The lower computer returns the ack to the upper computer.

S808: The lower computer waits for end sent by the upper computer.

S809: The lower computer determines whether the end sent by the upper computer is received.

In this embodiment of this application, when the lower computer does not receive the end sent by the upper computer, the lower computer performs the step shown in S805. When the lower computer receives the end sent by the upper computer, the lower computer may perform the step shown in S810.

S810: The lower computer returns the ack to the upper computer.

In this embodiment of this application, the lower computer returns the ack to the upper computer, and the lower computer combines a plurality of received data packets based on the number of the data packet and the successfully-received identifier, to end the transmission process. The plurality of data packets include the packet m.

S811: The lower computer sets a successfully-received identifier for a received data packet.

S812: The lower computer waits for continue sent by the upper computer.

S813: The lower computer determines whether the continue sent by the upper computer is received.

In this embodiment of this application, when the lower computer receives the continue sent by the upper computer, the lower computer may perform the step shown in S814. When the lower computer does not receive the continue sent by the upper computer, the lower computer may perform the step shown in S812.

S814: The lower computer returns the ack to the upper computer.

In this embodiment of this application, the lower computer returns the ack to the upper computer, and the lower computer performs the step shown in S805.

For beneficial effects of this embodiment of this application, refer to the descriptions in the foregoing embodiment of dual-side communication between the upper computer and the lower computer. Details are not described herein again.

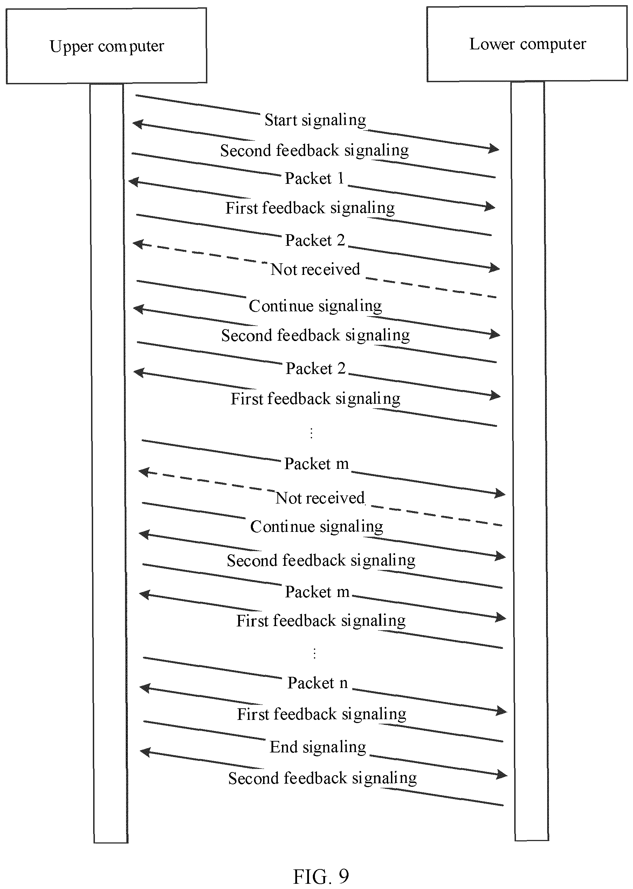

For example, FIG. 9 is a schematic diagram of downloading an application program through interaction between an upper computer and a lower computer. Not received indicates that the lower computer does not receive signaling or a data packet sent by the upper computer, or the upper computer does not receive signaling sent by the lower computer.

As shown in FIG. 9, the upper computer divides to-be-transmitted data into a plurality of data packets. The plurality of data packets include: a packet 1, a packet 2, ..., a packet m, ..., and a packet n.

The upper computer sends start signaling to the lower computer, and the lower computer returns second feedback signaling to the upper computer after receiving the start signaling.

The upper computer starts to transmit a data packet, the upper computer sends the packet 1 to the lower computer, and the lower computer returns the second feedback signaling to the upper computer after receiving the packet 1.

The upper computer sends the packet 2 to the lower computer. When a serial interface exception or network exception occurs on the lower computer, the lower computer does not receive the packet 2 from the upper computer.

When serial interface communication or network communication is restored, the upper computer sends continue signaling to the lower computer, and the lower computer returns the second feedback signaling to the upper computer after receiving the continue signaling.

It may be understood that, if the data packet m or any other data packet is not successfully sent because the serial interface exception or the network exception occurs, or the like, the foregoing sending process of the data packet 2 may be performed, and details are not described herein again.

The upper computer transmits a plurality of data packets by using the foregoing data packet transmission method, the upper computer sends the packet n to the lower computer, and the lower computer returns first feedback signaling to the upper computer.

The upper computer determines that the data packet is sent, the upper computer sends end signaling to the lower computer, and the lower computer returns the second feedback signaling to the upper computer, to end a data transmission process.

The foregoing describes the methods in the embodiments of this application with reference to FIG. 5 to FIG. 9. The following describes a data packet processing apparatus that is provided in an embodiment of this application and that performs the foregoing methods. A person skilled in the art may understand that the method and the apparatus may be mutually combined and referenced. A data packet processing apparatus provided in embodiments of this application may perform the steps performed by the upper computer in the foregoing data packet processing method. Another data packet processing apparatus may perform the steps performed by the lower computer in the data packet processing method in the foregoing embodiments.

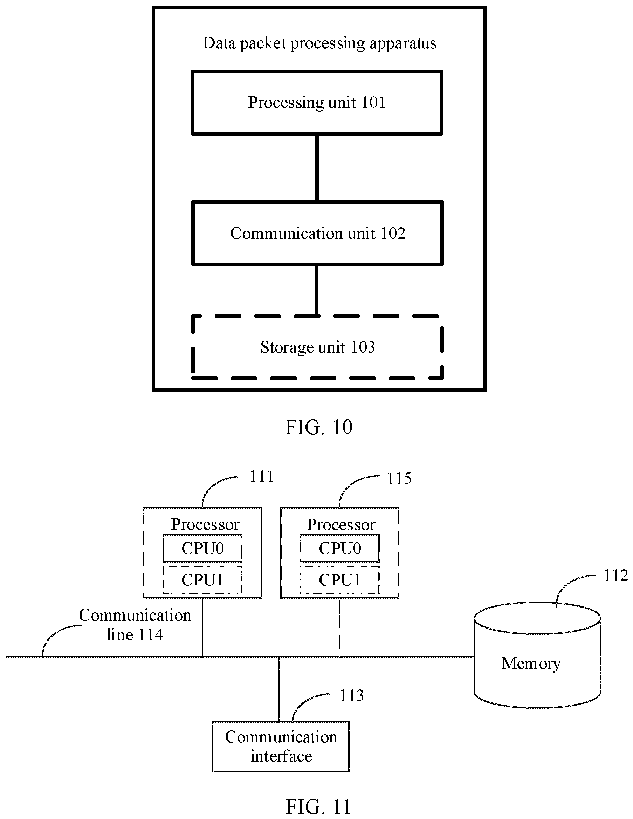

FIG. 10 is a schematic diagram of a structure of a data packet processing apparatus according to an embodiment of this application. The data packet processing apparatus may be an upper computer or a lower computer in embodiments of this application, or may be a chip applied to an upper computer or a lower computer. The data packet processing apparatus includes a processing unit 101 and a communication unit 102. The communication unit 102 is configured to support the data packet processing apparatus in performing an information sending or receiving step. The processing unit 101 is configured to support the data packet processing apparatus in performing an information processing step.

In a possible embodiment, the data packet processing apparatus may further include a storage unit 103. The processing unit 101, the communication unit 102, and the storage unit 103 are connected through a communication bus.

The storage unit 103 may include one or more memories. The memory may be a component that is configured to store a program or data and that is in one or more devices or circuits.

The storage unit 103 may exist independently, and is connected to the processing unit 101 of the data packet processing apparatus through the communication bus. The storage unit 103 may alternatively be integrated with the processing unit.

The data packet processing apparatus may be used in a communication device, a circuit, a hardware component, or a chip.

For example, the data packet processing apparatus may be a chip or a chip system of an upper computer or a lower computer in embodiments of this application. In this case, the communication unit 102 may be an input or output interface, a pin, a circuit, or the like. For example, the storage unit 103 may store computer-executable instructions of a method on a side of the upper computer or the lower computer, so that the processing unit 101 performs the method on the side of the upper computer or the lower computer in the foregoing embodiments. The storage unit 103 may be a register, a cache, a RAM, or the like. The storage unit 103 may be integrated with the processing unit 101. The storage unit 103 may be a ROM or another type of static storage device that can store static information and instructions, and the storage unit 103 may be independent of the processing unit 101.

An embodiment of this application provides the data packet processing apparatus. The data packet processing apparatus includes one or more modules, configured to implement the methods in the steps included in FIG. 5 to FIG. 9. The one or more modules may correspond to the steps of the methods in the steps included in FIG. 5 to FIG. 9.

FIG. 11 is a schematic diagram of a hardware structure of a data packet processing apparatus according to an embodiment of this application. For a structure of hardware of an upper computer or a lower computer in this embodiment of this application, refer to a schematic diagram of the structure of the hardware of the data packet processing apparatus shown in FIG. 11. The data packet processing apparatus includes a processor 111, a communication line 114, and at least one communication interface (a communication interface 113 is used as an example in FIG. 11 for description).

The processor 111 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 114 may include a path for transferring information between the components described above.

The communication interface 113 is any apparatus such as a transceiver, and is configured to communicate with another device or a communication network such as the Ethernet, a wireless local area network (wireless local area network, WLAN), or a RAN.

Possibly, the data packet processing apparatus may further include a memory 112.

The memory 112 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory may exist independently, and is connected to the processor through the communication line 114. The memory may alternatively be integrated with the processor.

The memory 112 is configured to store computer-executable instructions for performing the solutions of this application, and the processor 111 controls execution. The processor 111 is configured to execute the computer-executable instructions stored in the memory 112, to implement the data packet processing method provided in embodiments of this application.

Possibly, the computer-executable instructions in this embodiment of this application may also be referred to as application program code. This is not specifically limited in this embodiment of this application.

During specific implementation, in an embodiment, the processor 111 may include one or more CPUs, for example, a CPU 0 and a CPU 1 shown in FIG. 11.

In a specific implementation, in an embodiment, the data packet processing apparatus may include a plurality of processors, for example, the processor 111 and the processor 115 in FIG. 11. Each of the processors may be a single-core (single-CPU) processor, or may be a multi-core (multi-CPU) processor. The processor herein may be one or more devices, circuits, and/or processing cores configured to process data (for example, computer program instructions).

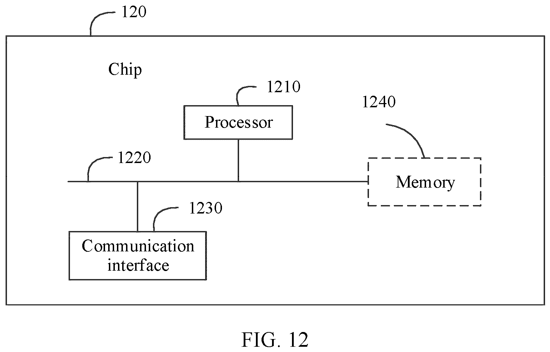

FIG. 12 is a schematic diagram of a structure of a chip 120 according to an embodiment of the present invention. The chip 120 includes one or more (including two) processors 1210 and a communication interface 1230.

In a possible embodiment, the chip 120 shown in FIG. 12 further includes a memory 1240. The memory 1240 may include a read-only memory and a random access memory, and provide operation instructions and data for the processor 1210. A part of the memory 1240 may further include a non-volatile random access memory (non-volatile random access memory, NVRAM).

In some implementations, the memory 1240 stores the following elements: an executable module or a data structure, or a subset thereof, or an extension set thereof.

In this embodiment of the present invention, a corresponding operation is performed by invoking the operation instructions stored in the memory 1240 (where the operation instructions may be stored in an operating system).

In a possible implementation, a structure of a chip used by an upper computer is similar to that of a chip used by a lower computer, and different apparatuses may use different chips to implement respective functions.

The processor 1210 controls an operation of the upper computer or the lower computer, and the processor 1210 may also be referred to as a central processing unit (central processing unit, CPU). The memory 1240 may include a read-only memory and a random access memory, and provide instructions and data for the processor 1210. A part of the memory 1240 may further include a non-volatile random access memory (non-volatile random access memory, NVRAM). For example, in an application, the memory 1240, the communication interface 1230, and the memory 1240 are coupled together through a bus system 1220. In addition to a data bus, the bus system 1220 may further include a power bus, a control bus, a status signal bus, and the like. However, for clarity of description, various buses are marked as the bus system 1220 in FIG. 12.

The foregoing communication unit may be an interface circuit or a communication interface of the apparatus, and is configured to receive a signal from another apparatus. For example, when the apparatus is implemented as a chip, the communication unit is an interface circuit or a communication interface that is of the chip and that is configured to receive a signal from or send a signal to another chip or apparatus.

The method disclosed in the foregoing embodiment of the present invention may be applied to the processor 1210, or may be implemented by the processor 1210. The processor 1210 may be an integrated circuit chip and has a signal processing capability. In an implementation process, steps of the foregoing methods may be accomplished by using an integrated logic circuit of hardware in the processor 1210 or instructions in a form of software. The processor 1210 may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. It may implement or perform the methods, the steps, and logical block diagrams that are disclosed in embodiments of the present invention. The general-purpose processor may be a microprocessor, or the processor may be any conventional processor or the like. Steps of the methods disclosed with reference to embodiments of the present invention may be directly executed and accomplished using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1240, and the processor 1210 reads information in the memory 1240 and completes the steps of the foregoing method in combination with the hardware of the processor 1210.

In a possible implementation, the communication interface 1230 is configured to perform receiving and sending steps of the upper computer or the lower computer in embodiments shown in FIG. 5 to FIG. 9. The processor 1210 is configured to perform processing steps of the upper computer or the lower computer in embodiments shown in FIG. 5 to FIG. 9.

In embodiments, the instructions that are stored in the memory and that are to be executed by the processor may be implemented in a form of a computer program product. The computer program product may be written into the memory in advance, or may be downloaded and installed in the memory in a form of software.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state drive (solid state disk, SSD)), or the like.

Embodiments of this application further provide a computer-readable storage medium. The methods described in the foregoing embodiments may be all or partially implemented by software, hardware, firmware, or any combination thereof. If the methods are implemented in the software, functions may be used as one or more instructions or code and stored in the computer-readable medium or transmitted on the computer-readable medium. The computer-readable medium may include a computer storage medium and a communication medium, and may further include any medium that can transfer a computer program from one place to another. The storage medium may be any target medium that can be accessed by a computer.

In a possible design, the computer-readable medium may include a RAM, a ROM, an EEPROM, a CD-ROM or another compact disc storage, a magnetic disk storage or another magnetic storage device, or any other medium that is used to carry or store required program code in a form of instructions or a data structure and that can be accessed by a computer. In addition, any connection is appropriately referred to as a computer-readable medium. For example, if a coaxial cable, an optical fiber cable, a twisted pair, a digital subscriber line (DSL), or wireless technologies (such as infrared, radio, and microwave) are used to transmit software from a website, a server, or another remote source, the coaxial cable, the optical fiber cable, the twisted pair, the DSL, or the wireless technologies such as infrared, radio, and microwave are included in a definition of the medium. Magnetic disks and optical discs used in this specification include a compact disc (CD), a laser disc, an optical disc, a DVD, a floppy disk, and a Blu-ray disc. The magnetic disks usually magnetically reproduce data, and the optical discs optically reproduce data by using laser light. The foregoing combinations also need to be included within the scope of the computer-readable medium.

Embodiments of this application further provide a computer program product. The methods described in the foregoing embodiments may be all or partially implemented by software, hardware, firmware, or any combination thereof. If the methods are implemented in the software, all or some of the methods may be implemented in a form of the computer program product. The computer program product includes one or more computer instructions. When the foregoing computer program instructions are loaded and executed on a computer, all or a part of the procedures or functions according to the foregoing method embodiments are generated. The computer may be a general-purpose computer, a dedicated computer, a computer network, a base station, a terminal, or another programmable apparatus.

This application describes a plurality of embodiments in detail with reference to a plurality of flowcharts. However, it should be understood that the flowcharts and related descriptions of corresponding embodiments thereof are merely examples for ease of understanding, and shall not constitute any limitation on this application. Each step in each flowchart does not necessarily need to be performed. For example, some steps may be skipped. In addition, an execution sequence of each step is not fixed, and is not limited to that shown in the figure. The execution sequence of each step is determined based on a function and internal logic of the step.

A plurality of embodiments described in this application may be arbitrarily combined, or steps may intersect with each other for execution. An execution sequence of the embodiments or an execution sequence of the steps of the embodiments is not fixed, and is not limited to that shown in the figure. The execution sequence of the embodiments and a cross execution sequence of the steps of the embodiments should be determined by using functions and internal logic of the embodiments and the steps.

Although this application is described with reference to specific features and embodiments thereof, it is clear that various modifications and combinations may be made to them without departing from the spirit and scope of this application. Correspondingly, the specification and accompanying drawings are merely example description of this application defined by the appended claims, and are considered as any of or all modifications, variations, combinations or equivalents that cover the scope of this application. It is clearly that, a person skilled in the art can make various modifications and variations to this application without departing from the scope of this application.

## Claims

1. A data packet processing method, comprising:
sending, by an upper computer, a target data packet to a lower computer;
determining, by the upper computer based on a preset condition, that first feedback signaling from the lower computer is not received, wherein the first feedback signaling is feedback signaling from the lower computer in response to a data packet of the upper computer;
sending, by the upper computer, continue signaling to the lower computer, wherein the continue signaling indicates to continue sending the target data packet;
receiving, by the upper computer, second feedback signaling from the lower computer, wherein the second feedback signaling is feedback signaling from the lower computer in response to signaling of the upper computer; and
sending, by the upper computer, the target data packet to the lower computer.

2. The method according to claim 1, wherein before the sending, by an upper computer, a target data packet to a lower computer, the method further comprises:
sending, by the upper computer, start signaling to the lower computer, wherein the start signaling indicates that data transmission starts; and
the sending, by an upper computer, a target data packet to a lower computer comprises: receiving, by the upper computer, the second feedback signaling from the lower computer, and sending, by the upper computer, the target data packet to the lower computer.

3. The method according to claim 1 or 2, further comprising:
determining, by the upper computer, that the data packet is sent; and
sending, by the upper computer, end signaling to the lower computer, wherein the end signaling indicates that data transmission ends.

4. The method according to any one of claims 1 to 3, wherein before the sending, by an upper computer, a target data packet to a lower computer, the method further comprises:
dividing, by the upper computer, to-be-sent data into a plurality of data packets, wherein the plurality of data packets comprise the target data packet, each data packet comprises a number, and the number is used by the lower computer to combine the plurality of data packets.

5. The method according to any one of claims 1 to 4, wherein the determining, by the upper computer based on a preset condition, that first feedback signaling from the lower computer is not received comprises:
determining, by the upper computer, that the first feedback signaling from the lower computer is not received within a preset time threshold.

6. The method according to any one of claims 1 to 5, wherein before the sending, by the upper computer, continue signaling to the lower computer, further comprising:
setting, by the upper computer, an unsuccessfully-sent identifier for the target data packet; and
the sending, by the upper computer, the target data packet to the lower computer comprises:
sending, by the upper computer, the target data packet to the lower computer based on the unsuccessfully-sent identifier.

7. A data packet processing method, comprising:
receiving, by a lower computer, continue signaling from an upper computer, wherein the continue signaling indicates to continue sending a target data packet;
sending, by the lower computer, second feedback signaling to the upper computer in response to the continue signaling, wherein the second feedback signaling is feedback signaling from the lower computer in response to signaling of the upper computer; and
receiving, by the lower computer, the target data packet from the upper computer.

8. The method according to claim 7, wherein before the receiving, by a lower computer, continue signaling from an upper computer, further comprising:
receiving, by the lower computer, start signaling from the upper computer, wherein the start signaling indicates that data transmission starts; and
sending, by the lower computer, the second feedback signaling to the upper computer in response to the start signaling.

9. The method according to claim 7 or 8, wherein before the receiving, by a lower computer, continue signaling from an upper computer, further comprising:
determining, by the lower computer, that the target data packet from the upper computer is not received; and
setting, by the lower computer, a successfully-received identifier for a received data packet.

10. The method according to any one of claims 7 to 9, further comprising:
receiving, by the lower computer, end signaling from the upper computer, wherein the end signaling indicates that data transmission ends; and
sending, by the lower computer, the second feedback signaling to the upper computer in response to the end signaling.

11. The method according to claim 10, wherein after the sending, by the lower computer, the second feedback signaling to the upper computer in response to the end signaling, further comprising:
combining, by the lower computer, a plurality of received data packets, wherein the plurality of data packets comprises numbers and the successfully-received identifiers.

12. A data packet processing apparatus, comprising at least one processor, configured to invoke a program in a memory, to perform the method according to any one of claims 1 to 6, or perform the method according to any one of claims 7 to 11.

13. A data packet processing apparatus, comprising at least one processor and an interface circuit, wherein the interface circuit is configured to provide information input and/or information output for the at least one processor, and the at least one processor is configured to perform the method according to any one of claims 1 to 6, or perform the method according to any one of claims 7 to 11.

14. A chip, comprising at least one processor and an interface, wherein
the interface is configured to provide program instructions or data for the at least one processor; and
the at least one processor is configured to execute the program instructions, to implement the method according to any one of claims 1 to 6, or implement the method according to any one of claims 7 to 11.

15. A computer-readable storage medium, wherein the computer-readable storage medium stores instructions, and when the instructions are executed, a computer is enabled to perform the method according to any one of claims 1 to 6, or perform the method according to any one of claims 7 to 11.
